Europäisches Patentamt

European Patent Office

Office européen des brevets

(11) Veröffentlichungsnummer: **0 243 581**
**A2**

## (12) EUROPÄISCHE PATENTANMELDUNG

(21) Anmeldenummer: **87100864.5**

(22) Anmeldetag: **22.01.87**

(51) Int. Cl.⁴: **A61C 17/02**

(30) Priorität: **14.04.86 DE 3612457**

(43) Veröffentlichungstag der Anmeldung:
**04.11.87 Patentblatt 87/45**

(84) Benannte Vertragsstaaten:
**AT BE CH DE ES FR GB GR IT LI LU NL SE**

(71) Anmelder: **Petz, Günter**
**Flachslander Strasse 8**
**D-8500 Nürnberg(DE)**

(72) Erfinder: **Petz, Günter**
**Flachslander Strasse 8**
**D-8500 Nürnberg(DE)**

(74) Vertreter: **Göbel, Matthias, Dipl.-Ing.**
**Pruppacher Hauptstrasse 5-7**
**D-8501 Pyrbaum-Pruppach(DE)**

(54) **Munddusche.**

(57) Bei einer Munddusche mit einem Aufnahmegehäuse für eine Pumpe und einen Pumpenmotor
sowie einen auf dem Aufnahmegehäuse dicht aufstellbaren Wasserbehälter, der im Bodenbereich einen durch einen Dichtkörper verschlossenen Ablauf
aufweist und durch Anlüften des Dichtkörpers mit
dem Pumpenzulauf verbindbar ist, weist zur stabilen
Stützung des Wasserbehälters auf dem Aufnahmegehäuse, der Wasserbehälter (5) bodenunterseitig
einen den Wasserablauf im Abstand mindestens abschnittsweise umfassenden Ringkörper (13) fest auf,
vermittels dem der Wasserbehälter (5) auf dem Aufnahmegehäuse abstützbar ist.

Fig. 2

EP 0 243 581 A2

## Munddusche

Die Erfindung betrifft eine Munddusche mit einem Aufnahmegehäuse für eine Pumpe und einen Pumpenmotor sowie einen auf dem Aufnahmegehäuse dicht aufstellbaren Wasserbehälter, der im Bodenbereich einen durch einen Dichtkörper verschlossenen Ablauf aufweist und durch Anlüften des Dichtkörpers mit dem Pumpenzulauf verbindbar ist.

Bei bekannten Mundduschen dieser Art greift der auf das Aufnahmegehäuse aufgestellte Wasserbehälter mit einem als Dichtkörper dienenden zylindrischen Ansatz in eine topfförmige Ausnehmung des Aufnahmebehälters dicht ein, während die quer zum Dichtkörper sich erstreckenden Begrenzungsflächen des Ansatzes durch Aufliegen auf das Aufnahmegehäuse den Wasserbehälter stützen. Abgesehen davon, daß die so erzielte Abstützung unter dem Einfluß von Querkräften Abkippungen des Wasserbehälters zulassen, tritt bei Kippbewegungen auch eine erhebliche mechanische Belastung des Dichtkörpers auf.

Die Erfindung hat die Schaffung von Maßnahmen zur Aufgabe, die zu einer stabilen Stützung des Wasserbehälters auf dem Aufnahmegehäuse führen.

Erfindungsgemäß ist diese Aufgabe dadurch gelöst, daß der Wasserbehälter bodenunterseitig einen den Wasserablauf im Abstand mindestens abschnittsweise umfassenden Ringkörper fest aufweist und daß der Wasserbehälter durch den Ringkörper auf dem Aufnahmegehäuse abstützbar ist. Bevorzugt ist dabei der Ringkörper umlaufend geschlossen ausgeführt und einstückig mit dem Wasserbehälter ausgebildet. Eine sichere Abstützung ergibt sich durch die Anordnung einer Ringnut im Aufnahmegehäuse, in die der Ringkörper mit einer Teillänge eintaucht und in der Ringnut radial geführt ist. Auf diese Weise ist eine Abstützung des Wasserbehälters mit mehr oder weniger grossem Abstand zum Dichtkörper möglich gemacht, wodurch gegebenenfalls einwirkende Querkräfte wirkungslos bleiben.

Es versteht sich, daß in kinematischer Umkehrung das Aufnahmegehäuse, auf der dem Wasserbehälter zugewandten Seite einen Ringkörper fest aufweisen kann, der den Wasserablauf im Abstand umfaßt und den Wasserbehälter stützt.

Das maßgebliche der Erfindung wird darin gesehen, mit möglichst großem Abstand zum Dichtkörper bzw. Ablauf am Wasserbehälter eine Abstützung für diesen auf dem Aufnahmegehäuse zu erzielen.

Die Erfindung ist anhand eines Ausführungsbeispiels in der Zeichnung verdeutlicht. Es bedeuten:

Fig. 1 einen Teilschnitt eines Aufnahmegehäuses,

Fig. 2 einen Teilschnitt eines Wasserbehälters und

Fig. 3 Teilschnitte von Aufnahmegehäuse und Wasserbehälter entsprechend einer abgewandelten Ausführungsform.

In den Fig. ist mit 1 der Oberteil eines Aufnahmegehäuses für eine Pumpe und Antriebsmotor (nicht gezeigt) bezeichnet. Der Gehäuseoberteil weist eine Ausnehmung 2 auf, die von einem gehäusefesten Ansatz 3 durchragt ist. Mit 4 ist eine sich an der Ausnehmung 2 anschließende Ablauföffnung für Wasser bezeichnet, die mit dem Pumpenzulauf (nicht gezeigt) in Verbindung steht. Auf dem Gehäuseoberteil 1 ist ein Wasserbehälter 5 aufstellbar. Der Wasserbehälter 5 weist im Boden 5' einen Dichtring 6 auf, der in einer Ausnehmung 7 des Bodens 5' eingesprengt ist und zweckmäßig aus einem federnd elastischen Werkstoff, z.B. Gummi oder Kunststoff besteht. Die Dichtung trägt eine mit Öffnungen 8 versehene Kappe 9, die eine als Verschlußstück wirkende Dichtkugel 10 mit Spiel umfaßt. Die Dichtkugel 10 ist mit einem Sitz 11 im Dichtring 6 zur Wirkung bringbar.

Der Wasserbehälter 5 kann, wie dargestellt, vom Oberteil abgehoben und getrennt von diesem mit Flüssigkeit, z.B. Wasser gefüllt werden. Unter dem Einluß von Schwerkraft liegt die Dichtkugel 10 am Sitz 11 an und verhindert ein unbeabsichtigtes Ablaufen von Wasser aus dem Wasserbehälter 5. Beim Aufstellen des Wasserbehälters 5 auf den Gehäuseoberteil 1 greift der zylindrische Teil 6' des Dichtringes 6 in die Ausnehmung 2 ein und kommt mit als Dichtlippen wirkende Anformungen 6" mit den Begrenzungsflächen der Ausnehmung 2 zur Wirkung, um eine dichte Verbindung von Wasserbehälter und Gehäuseoberteil zu erzielen. Gleichzeitig durchgreift der Ansatz 3 die Mittelöffnung 12 des Dichtringes 6 und bewirkt eine Anhebung der Dichtkugel 10 in die gestrichelte Stellung. Nunmehr kann Wasser aus dem Wasserbehälter über die Mittelöffnung 12 zum Pumpenzulauf gelangen.

Der Wasserbehälter ist bodenunterseitig mit einem im Abstand um den Dichtring 6 herumgeführten Ringkörper 13 versehen, der als Stützglied für den Wasserbehälter auf dem Gehäuseoberteil 1 dient. Während nämlich die Dichtung in die Ausnehmung 7 dicht eintaucht. liegt der Ringkörper 13 auf das Gehäuseoberteil 1 auf und ergibt eine stabile Stützung des Wasserbehälters 5 auf den Gehäuseoberteil 1.

Zweckmäßig sind die Anlageflächen am Gehäuseoberteil 1 durch eine Ringnut 14 gebildet, die eine axiale Führung des Wasserbehälters 5 auf den Gehäuseoberteil 1 bewirkt.

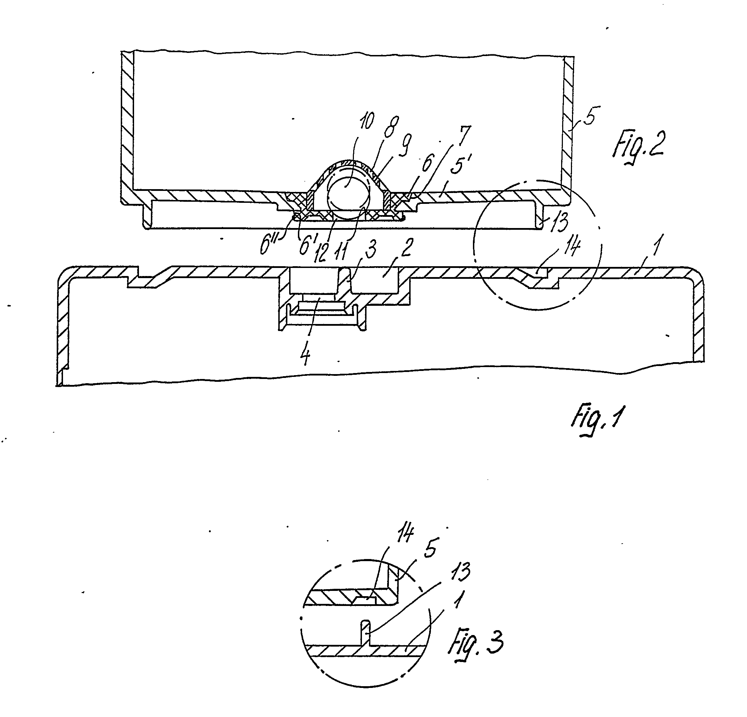

Es entspricht dem Erfindungsgedanken, daß in kinematischer Umkehrung gegebenenfalls der Gehäuseoberteil 1 einen Ringkörper 13 aufweisen kann, der beim Aufstellen des Wasserbehälters 5 auf den Gehäuseoberteil 1 den Wasserbehälter 5 stützt (Fig. 2) Bei dieser Ausführung kann der Wasserbehälter 5 eine Ringnut 14 aufweisen, in die der Ringkörper 13 zur axialen Führung eintaucht.

## Ansprüche

1. Munddusche mit einem Aufnahmegehäuse für eine Pumpe und einen Pumpenmotor sowie einen auf dem Aufnahmegehäuse dicht aufstellbaren Wasserbehälter, der im Bodenbereich einen durch einen Dichtkörper verschlossenen Ablauf aufweist und durch Anlüften des Dichtkörpers mit dem Pumpenzulauf verbindbar ist, dadurch gekennzeichnet, daß der Wasserbehälter (5) bodenunterseitig einen den Wasserablauf im Abstand mindestens abschnittsweise umfassenden Ringkörper (13) fest aufweist und daß der Wasserbehälter (5) durch den Ringkörper (13) auf dem Aufnahmegehäuse abstützbar ist.

2. Munddusche nach Anspruch 1, dadurch gekennzeichnet, daß der Ringkörper (13) als umlaufend geschlossener Ringkörper und einstückig mit dem Wasserbehälter (5) ausgebildet ist.

3. Munddusche nach Anspruch 1, dadurch gekennzeichnet, daß der Ringkörper (13) in eine im Aufnahmegehäuse (1) angeordnete Ringnut (14) mit einer Teillänge eintaucht und in dieser radial geführt ist.

4. Munddusche mit einem Aufnahmegehäuse für eine Pumpe und einen Pumpenmotor sowie einem auf das Aufnahmegehäuse dicht aufstellbaren Wasserbehälter, der im Bodenbereich einen durch einen Dichtkörper verschlossenen Ablauf aufweist und durch Anlüften des Dichtkörpers mit dem Pumpenzulauf verbindbar ist, dadurch gekennzeichnet, daß das Aufnahmegehäuse (1) auf der dem Wasserbehälter (5) zugewandten Seite einen Ringkörper (13) fest aufweist, der den Wasserablauf im Abstand umfaßt und den Wasserbehälter (5) stützt.

10  8
9
7
5
6'  5'

Fig.2

6"  6'  12  11  3  2
4  1

Fig.1

14
5
13
1

Fig.3